# EUROPÄISCHE PATENTSCHRIFT

(11) **EP 2 183 487 B1**
(45) Veröffentlichungstag und Bekanntmachung des Hinweises auf die Patenterteilung: **13.12.2017**
(21) Anmeldenummer: 08785550.8
(22) Anmeldetag: 14.08.2008
(51) Int. Cl.: F04D 29/42, F04D 29/62, F01D 9/02, F03B 3/02, F03B 3/18

(54) **STRÖMUNGSMASCHINE UND HERSTELLUNGSVERFAHREN FÜR EINE SOLCHE STRÖMUNGSMASCHINE**
TURBO ENGINE AND METHOD FOR PRODUCING SUCH A TURBO ENGINE
TURBOMACHINE ET PROCÉDÉ DE PRODUCTION D'UNE TURBOMACHINE DE CE TYPE

(30) Priorität: 07.09.2007 DE 102007042529
(43) Veröffentlichungstag der Anmeldung: 12.05.2010
(73) Patentinhaber: MAN Diesel & Turbo SE, 86153 Augsburg (DE)
(72) Erfinder: WACKER, Christian, 13585 Berlin (DE); MURZYN, Wojciech, 13469 Berlin (DE)
(86) Internationale Anmeldenummer: PCT/EP2008/006701
(87) Internationale Veröffentlichungsnummer: WO 2009/033549

(56) Entgegenhaltungen:
- EP-A- 1 394 366
- DE-A1- 3 005 125
- FR-A- 1 274 253
- JP-A- 60 032 936
- US-A- 3 316 848
- US-A- 3 664 001
- US-B1- 6 193 463

## Beschreibung

Die vorliegende Erfindung betrifft eine Strömungsmaschine mit fliegendem Laufrad, insbesondere einen Radial- bzw. Spiralverdichter, einen Radial- bzw. Spiralexpander, eine Francis-Turbine oder eine Radial-, Zentrifugal- bzw. Spiralgehäusepumpe, nach dem Oberbegriff des Anspruchs 1 sowie ein Verfahren zur Herstellung einer solchen Strömungsmaschine. Die EP 1 394 366 offenbart eine solche Strömungsmaschine.

In einer gattungsgemäßen Strömungsmaschine ist ein Laufrad zwischen einem axialen Diffusor und einer Spirale oder einem Sammelraum angeordnet und lenkt ein Fluid zwischen einer axialen und einer radialen Richtung um. Beispielsweise kann ein Laufrad durch eine angetriebene Laufradwelle gedreht werden, dabei Fluid in axialer Richtung durch den Diffusor ansaugen und in die Spirale bzw. den Sammelraum umleiten. Durch die Richtungsumlenkung und die anschließende Spirale bzw. den anschließenden Sammelraum wird die Strömungsgeschwindigkeit des Fluides in Druck umgesetzt, sodass eine solche Strömungsmaschine beispielsweise als Kompressor Gase verdichten oder als Pumpe Flüssigkeiten fördern kann.
Umgekehrt erhält in die Spirale bzw. den Sammelraum einströmendes und aus dem axialen Diffusor austretendes Fluid unter Umlenkung seiner Strömungsrichtung einen Drehimpuls, den es bei Durchtritt durch das Laufrad teilweise an dieses abgibt, so dass das Laufrad unter Abbau von Strömungs- bzw. Druckenergie eine mit dem Laufrad verbundene Laufradwelle antreibt. Beispielsweise kann ein Radialexpander unter Abbau von Druckenergie eines Gases oder eine Francis-Turbine unter Abbau von Strömungsenergie einer Flüssigkeit zur Energiegewinnung genutzt werden. Beide Verwendungsmöglichkeiten können auch miteinander kombiniert sein. So kann beispielsweise eine erste gattungsgemäße Strömungsmaschine in Form eines Expanders durch Abgase einer Brennkraftmaschine angetrieben werden. Ein mit dem Laufrad der ersten Strömungsmaschine verbundenes Laufrad einer zweiten Strömungsmaschine kann dann Frischluft verdichten und der Brennkraftmaschine zuführen. Eine gattungsgemäße Strömungsmaschine kann daher insbesondere einen Expander und/oder Verdichter eines Turboladers einer, vorzugsweise selbstzündenden, Brennkraftmaschine bilden.

Spiralen und andere Sammelräume werden im Folgenden einheitlich als Spirale bezeichnet, können jedoch auch andere Geometrien umfassen. Somit ist beispielsweise unter einer Spiralkontur allgemein auch eine andere Sammelraumkontur zu verstehen, die keine Spiralform aufweist. Insofern kann der Begriff "Spiral" bzw. "Spirale" stets auch durch "Sammelraum" substituiert werden.

Bisher werden die Spiralen als Gussgehäuse, die das Laufrad und einen Diffusoreinsatz aufnehmen, gegossen. Dies ermöglicht die materialsparende Herstellung der Spiralgeometrie als Freiformfläche. Nachteilig erfordert diese Herstellungsweise jedoch verlorene oder wiederverwendbare Gussmodelle. Um die Anzahl der notwendigen Gussmodelle zu begrenzen, werden solche Strömungsmaschinen deshalb nur in wenigen unterschiedlichen Baugrößen gefertigt. Solche aus einer begrenzten Baureihe auswählbaren Strömungsmaschinen sind jedoch nicht optimal an die jeweiligen Fluidströme und verschiedene Laufraddurchmesser anpassbar. Auf der anderen Seite erfordert diese Vorgehensweise, da insbesondere für Spiralen gleichen Durchmessers, aber entgegengesetzter Durchlaufrichtung je zwei Gussmodelle für denselben Durchmesser bereit gehalten werden müssen, nach wie vor die Herstellung und Lagerung einer verhältnismäßig großen Anzahl unterschiedlicher Gussmodelle.

Betriebsintern wurden daher bereits gattungsgemäße Strömungsmaschinen erprobt, bei denen die Spiralkontur in einen Spiralflansch eingefräst ist, der stumpf mit einer Rückwand verschweißt ist. An dem Spiralflansch ist zusätzlich ein Druckstutzen angeschweißt, der mit der Spirale kommuniziert und zum Ein- bzw. Austritt des Fluides vorgesehen ist.

Für solche Strömungsmaschinen sind vorteilhaft keine verschiedenen Gussmodelle vorrätig zu halten. Zudem kann die eingefräste Spirale für das jeweilige Laufrad bzw. den Fluidstrom optimiert werden. Die Halbzeuge Spiralflansch, Rückwand und Druckstutzen können aus günstig herstell- und bevorratbaren Stangen - Schmiedematerial hergestellt werden.

Nachteilig sind jedoch die erforderlichen Schweißnähte zwischen Spiralflansch, Rückwand und Druckstutzen. Zum einen ist deren Herstellung zeit- und kostenintensiv. Zum anderen erfordern die notwendigen fluid- und druckdichten Schweißnähte eine relativ hohe Schweißgüte, was den Herstellungsaufwand weiter erhöht. Zudem können nur schweißbare Halbzeuge verwendet werden, was insbesondere die einfache und günstige Herstellung von Halbzeugen als Urformteil, beispielsweise Gussteil, gegebenenfalls mit anschließender spanabhebender Bearbeitung, erschwert. Solche Strömungsmaschinen mit einem verschweißten Spiralflansch, in den die Spiralkontur eingefräst ist, wurden daher bislang nur für kleine Baugrößen mit entsprechend niedrigen Fluidströmen bzw. -drücken erprobt.

Aufgabe der vorliegenden Erfindung ist es daher, die Herstellung einer gattungsgemäßen Strömungsmaschine zu vereinfachen.

Zur Lösung dieser Aufgabe ist eine Strömungsmaschine nach dem Oberbegriff des Anspruchs 1 durch dessen kennzeichnende Merkmale weiter gebildet. Anspruch 17 stellt das entsprechende Herstellverfahren unter Schutz.

Eine erfindungsgemäße Strömungsmaschine umfasst ein Gehäuse, ein darin aufgenommenes Laufrad, eine Spirale oder ein Sammelraum und einen axialen Diffusoreinsatz, der, wenigstens teilweise, in dem Gehäuse aufgenommen ist. Erfindungsgemäß ist in dem Diffusoreinsatz eine Spiralkontur ausgebildet, die zusammen mit dem Gehäuse die Spirale definiert.

Im Gegensatz zum bekannten Stand der Technik ist die Spiralkontur daher nicht in dem Gehäuse ausgebildet, das dementsprechend einfach hergestellt werden kann. Bevorzugt ist die Spiralkontur an einer Stirn- und/oder Umfangsfläche des Diffusoreinsatzes ausgebildet, was die Herstellung des mit der Spiralkontur versehenen Diffusoreinsatzes ebenfalls vereinfacht.

Indem der axiale Diffusoreinsatz wenigstens teilweise in dem Gehäuse aufgenommen wird, vereinfacht sich seine Befestigung und die Abdichtung zwischen Diffusoreinsatz und Gehäuse. So kann der Diffusoreinsatz bevorzugt lösbar, insbesondere durch eine oder mehrere Schrauben mit dem Gehäuse verbunden sein. Damit entfallen die vorstehend erläuterten Nachteile der verschweißten Strömungsmaschine, i. e. die zeit- und kostenaufwendige Herstellung der Schweißverbindungen. Ein zusätzlicher Vorteil besteht darin, dass die Strömungsmaschine mehrfach zusammengesetzt und auseinandergebaut werden kann, sodass beispielsweise Dichtungen zwischen Gehäuse und Diffusoreinsatz oder Gehäuse und Laufrad einfacher zugänglich werden. Zudem können beschädigte Teile unter Weiterverwendung der übrigen Teile der Strömungsmaschine einfach ersetzt werden, was die Instandhaltungskosten reduziert.

Die Spiralkontur kann in dem Diffusoreinsatz bevorzugt spanabhebend ausgebildet werden, indem sie beispielsweise in eine Stirn- und/oder Umfangsfläche des Diffusoreinsatzes eingefräst wird.

Gleichermaßen kann der Diffusoreinsatz auch als Urformteil, insbesondere als Gussteil ausgebildet sein, wobei die Spiralkontur dann durch ein entsprechendes Gussmodell ausgebildet wird. Insbesondere, wenn Diffusoreinsatz und Gehäuse lösbar miteinander verbunden, beispielsweise verschraubt sind, können der Diffusoreinsatz und/oder das Gehäuse als Gussteil ausgebildet sein, da sie keine gute Schweißbarkeit aufweisen müssen.

Gleichermaßen können der Diffusoreinsatz und/oder das Gehäuse auch als Umformteil, insbesondere als Schmiedeteil, etwa als Gesenkschmiedeteil ausgebildet sein. Dies ermöglicht eine einfache Herstellung und kann aufgrund der beim Schmieden auftretenden Materialverdichtung zu höheren Festigkeiten der erfindungsgemäßen Strömungsmaschine beitragen.

Schließlich können auch Diffusoreinsatz und/oder Gehäuse als Schweißteil ausgebildet sein. Im Gegensatz zu der vorstehend erläuterten, betriebsintern bekannten Strömungsmaschine, bei der ein Spiralflansch mit einer Rückwand stumpf verschweißt wird, erfordern als Schweißteil ausgebildete Diffusoreinsätze bzw. Gehäuse nur kürzere Schweißnähte, die daher zeit- und kostensparend ausgeführt werden können.

Wird die Spiralkontur in dem Diffusoreinsatz spanabhebend ausgebildet oder ist der Diffusoreinsatz als Schweißteil ausgebildet, kann die Spiralgeometrie stets optimal an das Laufrad bzw. den Fluidstrom angepasst werden, ohne das hierfür eine Mehrzahl an Gussmodellen vorgehalten werden muss.

Die vorstehend erläuterten Ausführungen können auch miteinander kombiniert sein. So kann ein als Umformteil, Urformteil oder Schweißteil ausgebildeter Diffusoreinsatz mit einem als Umformteil, Urformteil oder Schweißteil ausgebildeten Gehäuse verbunden sein.

In einer bevorzugten Ausführung der vorliegenden Erfindung ist das Gehäuse im wesentlichen topfartig ausgebildet und wird mit dem Diffusoreinsatz fluiddicht verbunden. Hierzu kann der Diffusoreinsatz einen entsprechenden Flansch aufweisen. Dieser Flansch kann beispielsweise mit dem Gehäuse verschraubt sein, wobei bevorzugt zwischen Flansch und Gehäuse eine feste oder flüssige Dichtung vorgesehen sein kann.

Bildet der Diffusoreinsatz stirnseitig einen Anschluss der Strömungsmaschine und reicht bis zum Laufrad, kann der Diffusor durch den Diffusoreinsatz alleine gebildet sein. Alternativ kann der Diffusoreinsatz den Diffusor auch zusammen mit dem mit ihm verbundenen Gehäuse bilden. Gleichermaßen kann der Diffusoreinsatz einen Einlaufeinsatz aufnehmen, der dann alleine oder zusammen mit dem Gehäuse und/oder dem Diffusoreinsatz den Diffusor definiert. Im ersten und dritten Fall können vorteilhafterweise im selben Gehäuse verschiedene Diffusorgeometrien angeordnet werden, im zweiten Fall kann der Diffusoreinsatz kürzer ausgebildet werden.

Eine Öffnung, insbesondere in Form eines Druckstutzens, zum Ein- bzw. Austritt des Fluides, die mit der Spirale kommuniziert, kann besonders einfach durch eine Bohrung in dem Gehäuse realisiert sein. Hierzu kann eine entsprechende Bohrung, die in einer Oberfläche des Gehäuses mündet, zu einem Aufnahmeraum für den Diffusoreinsatz führen, der zusammen mit der in dem Diffusoreinsatz ausgebildeten Spiralkontur die Spirale der Strömungsmaschine definiert.

In gattungsgemäßen Strömungsmaschinen sind bevorzugt Leitgitter, beispielsweise Vorleitgitter zur Umlenkung der Strömung auf das Laufrad oder Nachleitgitter zur Umsetzung von Strömungsgeschwindigkeit in Druckenergie vorgesehen. Bei einer erfindungsgemäßen Strömungsmaschine kann hierzu in dem Gehäuse, dem Diffusoreinsatz und/oder einem Einlaufeinsatz eine Lagerung für ein solches Leitgitter ausgebildet sein. Hierdurch wird eine sehr kompakte Bauform möglich. Zudem können entsprechende Leitgitter besonders ortsfest und vibrationsarm an der Strömungsmaschine festgelegt werden.

Das Laufrad ist mit einer Laufradwelle fest oder lösbar verbunden. Hierzu kann in dem Gehäuse eine abgedichtete Lagerung für eine solche Laufradwelle ausgebildet sein. In einer bevorzugten Ausführung sind in dem Gehäuse auch Versorgungspassagen für eine solche Wellendichtung ausgebildet, durch die der Wellendichtung beispielsweise Luft, Öl oder ein anderes Fluid zu- bzw. von der der Wellendichtung abgeführt werden kann.

Weitere Aufgaben, Vorteile und Merkmale ergeben sich aus den Unteransprüchen und den nachfolgenden Ausführungsbeispielen. Hierzu zeigt, teilweise schematisiert:
- Fig. 1:: eine Schnittdarstellung einer Strömungsmaschine nach einer Ausführung der vorliegenden Erfindung;
- Fig. 2:: eine teilweise geschnittene, perspektivische Ansicht eines mit einem Gehäuse verbundenen Diffusoreinsatzes der Strömungsmaschine nach Fig. 1; und
- Fig. 3:: in perspektivischer Ansicht den Diffusoreinsatz nach Fig.2.

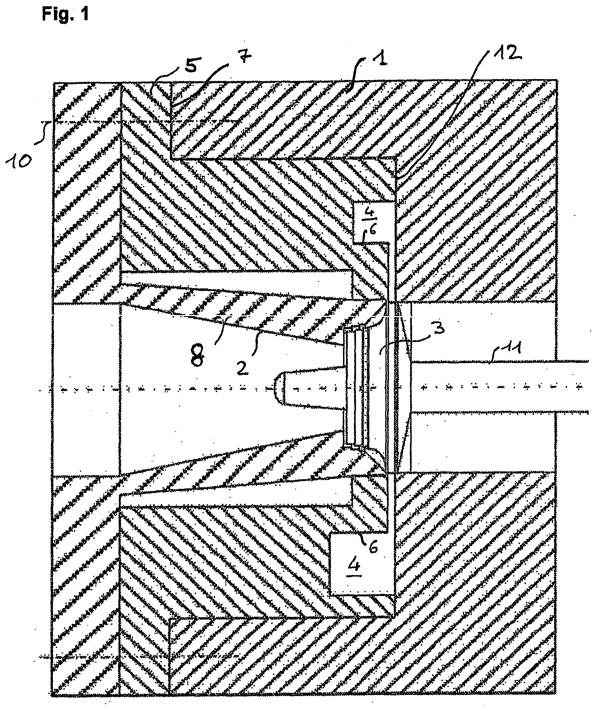

Fig. 1 zeigt in einer Schnittdarstellung eine Strömungsmaschine nach einer Ausführung der vorliegenden Erfindung in Form eines Kompressors. In einem gegossenen, topfartigen Gehäuse 1 ist ein Laufrad 3 drehbar aufgenommen. Über einen Flansch 7 ist ein axialer Diffusoreinsatz 5 mittels Schrauben 10 lösbar mit dem Gehäuse 1 verbunden. Zusammen mit dem Diffusoreinsatz 5 ist auch ein Einlaufeinsatz 8 mit dem Gehäuse 1 verschraubt.

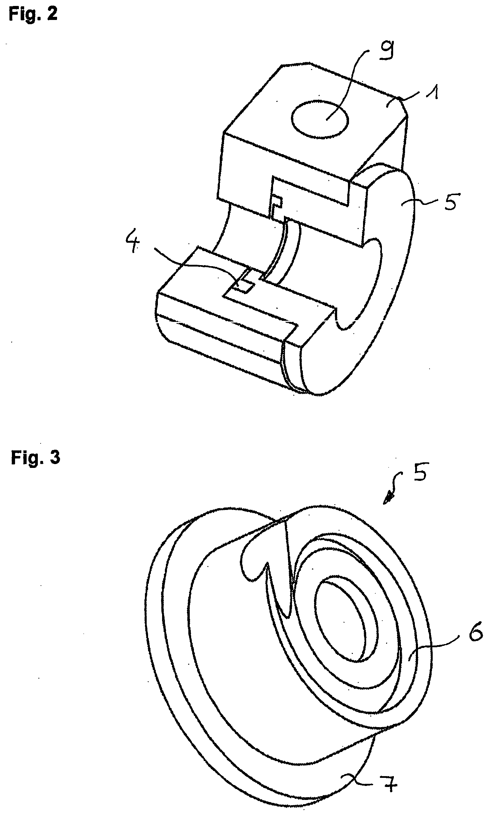

Der Einlaufeinsatz 8 bildet einen axialen Diffusor 2 in Form eines Düsenringes zur axialen Zuführung von Frischluft zum Laufrad 3 des Kompressors. Dessen Laufradwelle wird durch eine Turbine des Turboladers (nicht dargestellt) angetrieben und dreht das Laufrad 3, das dadurch Frischluft durch den axialen Diffusor 2 ansaugt und radial in eine Spirale 4 umlenkt. Hierdurch wird die Frischluft verdichtet und verlässt die Spirale 4 durch eine Öffnung 9 (vgl. Fig. 2).

Die Spirale 4 wird durch eine Spiralkontur 6 (vgl. Fig. 3), die in eine Stirnfläche des axialen Diffusoreinsatzes 5 eingefräst ist und über eine Öffnung in dessen Umfangsfläche mit der Öffnung 9 im Gehäuse kommuniziert, und eine Bodenfläche 12 einer Aussparung definiert, die im Gehäuse 1 ausgebildet ist und den axialen Diffusoreinsatz 5 teilweise aufnimmt (vgl. Fig. 1).

Die durch die eingefräste Spiralkontur 6 definierte Spirale 4 kann optimal für das Laufrad 3, den geplanten Volumenstrom im Auslegungspunkt des Kompressors und dergleichen dimensioniert werden. Hierzu müssen vorteilhafterweise keine entsprechenden Gussmodelle erstellt werden, die Spiralkontur 6 kann beispielsweise mittels computergesteuerten CNC-Fräsmaschinen in dem als Halbzeug aus Stangenmaterial geschmiedeten Diffusoreinsatz 5 ausgebildet werden.

Durch die Wahl eines Einlaufeinsatzes 8 mit entsprechendem axialen Diffusor 2, i. e. vorgegebener Länge und vorgegebenem Öffnungswinkel kann der Strömungsverlauf im Kompressor weiter optimiert werden.

Da Einlaufeinsatz 8, Diffusoreinsatz 5 und Gehäuse 1 miteinander verschraubt werden, entfallen aufwendige Schweißverbindungen. Zudem kann das Gehäuse 1 aus an sich schlecht schweißbarem Material, beispielsweise Grauguss, hergestellt werden. Bei einer Beschädigung des Laufrades 3, des Einlaufeinsatzes 8 oder des Diffusoreinsatzes 5 kann das entsprechende Teil nach Lösen der Verschraubung 10 einfach ausgetauscht werden.

Durch die teilweise Aufnahme des axialen Diffusoreinsatzes 5 im Gehäuse 1 ergibt sich eine sehr kompakter, fluiddichter und vibrationsarmer Aufbau des Kompressors.

## Patentansprüche

1. Strömungsmaschine, insbesondere Radialverdichter, Radialexpander, Francis-Turbine oder Radial- bzw. Zentrifugalpumpe, mit
einem Gehäuse (1);
einem axialen Diffusor (2);
einem Laufrad (3) zur Umlenkung eines Fluides zwischen einer axialen und einer radialen Richtung;
einer Spirale oder einem Sammelraum (4); und
einem axialen Diffusoreinsatz (5), der wenigstens teilweise in dem Gehäuse aufgenommen ist;
**dadurch gekennzeichnet, dass**
in dem Diffusoreinsatz (5) eine Spiral- bzw. Sammelraumkontur (6) ausgebildet ist, die zusammen mit dem Gehäuse (1) die Spirale bzw. den Sammelraum (4) definiert, **wobei zusammen mit dem Diffusoreinsatz (5) auch ein Einlaufeinsatz (8) mit dem Gehäuse verschraubt ist.**

2. Strömungsmaschine nach Anspruch 1, **dadurch gekennzeichnet, dass** der Diffusoreinsatz mit dem Gehäuse lösbar verbunden, insbesondere verschraubt ist

3. Strömungsmaschine nach einem der vorhergehenden Ansprüche,
**dadurch gekennzeichnet, dass** die Spiralkontur in dem Diffusoreinsatz spanabhebend ausgebildet, insbesondere in diesen eingefräst ist.

4. Strömungsmaschine nach einem der vorhergehenden Ansprüche,
**dadurch gekennzeichnet, dass** der Diffusoreinsatz und/oder das Gehäuse als Umformteil, insbesondere als Schmiedeteil ausgebildet ist.

5. Strömungsmaschine nach einem der vorhergehenden Ansprüche 1 - 3,
**dadurch gekennzeichnet, dass** der Diffusoreinsatz und/oder das Gehäuse als Urformteil, insbesondere als Gussteil ausgebildet ist.

6. Strömungsmaschine nach einem der vorhergehenden Ansprüche 1 - 3,
**dadurch gekennzeichnet, dass** der Diffusoreinsatz und/oder das Gehäuse als Schweißteil ausgebildet ist.

7. Strömungsmaschine nach einem der vorhergehenden Ansprüche,
**dadurch gekennzeichnet, dass** das Gehäuse topfartig ausgebildet ist und der Diffusoreinsatz mit dem Gehäuse fluiddicht verbunden ist.

8. Strömungsmaschine nach Anspruch 7, **dadurch gekennzeichnet, dass** der Diffusoreinsatz einen Flansch (7) aufweist, mit dem er mit dem Gehäuse fluiddicht verbunden ist.

9. Strömungsmaschine nach Anspruch 8 **dadurch gekennzeichnet, dass** der Flansch an dem Gehäuse lösbar befestigt, insbesondere mit diesem verschraubt ist.

10. Strömungsmaschine nach einem der vorhergehenden Ansprüche,
**dadurch gekennzeichnet, dass** der Diffusoreinsatz (5) zusammen mit dem Gehäuse den Diffusor bildet.

11. Strömungsmaschine nach einem der vorhergehenden Ansprüche 1 - 9,
**dadurch gekennzeichnet, dass** in dem Diffusoreinsatz (5) ein Einlaufeinsatz (8) angeordnet, insbesondere lösbar befestigt ist, der den axialen Diffusor (2) bildet.

12. Strömungsmaschine nach einem der vorhergehenden Ansprüche,
**dadurch gekennzeichnet, dass** in dem Gehäuse (1) eine Öffnung (9) zum Ein bzw. Austritt des Fluides vorgesehen ist, die mit der Spirale kommuniziert.

13. Strömungsmaschine nach einem der vorhergehenden Ansprüche,
**dadurch gekennzeichnet, dass** in dem Gehäuse und/oder dem Diffusoreinsatz eine Lagerung für ein Leitgitter, insbesondere ein Vor- bzw. Nachleitgitter ausgebildet ist.

14. Strömungsmaschine nach einem der vorhergehenden Ansprüche,
**dadurch gekennzeichnet, dass** in dem Gehäuse eine Abdichtung oder eine abgedichtete Lagerung für eine Welle (11) des Laufrades ausgebildet ist.

15. Strömungsmaschine nach einem der vorhergehenden Ansprüche,
**dadurch gekennzeichnet, dass** das Fluid ein Gas und die Strömungsmaschine ein Radialverdichter oder Radialexpander ist.

16. Strömungsmaschine nach einem der vorhergehenden Ansprüche 1 - 14,
**dadurch gekennzeichnet, dass** das Fluid eine Flüssigkeit und die Strömungsmaschine eine Francis-Turbine oder Spiralgehäusepumpe ist.

17. Verfahren zur Herstellung einer Strömungsmaschine nach einem der vorhergehenden Ansprüche, **dadurch gekennzeichnet, dass** das Gehäuse und der Diffusoreinsatz lösbar miteinander verbunden, insbesondere verschraubt werden.

18. Verfahren nach Anspruch 17, **dadurch gekennzeichnet, dass** Spiralkontur (6) in den Diffusoreinsatz (5) eingefräst wird.

## Claims

1. A turbo machine, in particular radial compressor, radial expander, Francis turbine or radial or centrifugal pump, with a housing (1);
an axial diffuser (2);
an impeller (3) for deflecting a fluid between an axial and a radial direction;
a spiral or a collecting space (4); and
an axial diffuser insert (5), which is at least partially received in the housing;
**characterized in that** in the diffuser insert (5) a spiral or collecting space contour (6) is formed, which together with the housing (1) defines the spiral or the collecting space (4), wherein together with the diffuser insert (5) an inlet insert (8) is also screwed to the housing.

2. The turbo machine according to Claim 1, **characterized in that** the diffuser insert is detachably connected to the housing, in particular screwed.

3. The turbo machine according to any one of the preceding claims, **characterized in that** the spiral contour in the diffuser insert is formed by way of chip-machining, in particular milled into the same.

4. The turbo machine according to any one of the preceding claims, **characterized in that** the diffuser insert and/or the housing are formed as a formed part, in particular as a forged part.

5. The turbo machine according to any one of the preceding Claims 1 - 3, **characterized in that** the diffuser insert and/or the housing is formed as a primary formed part, in particular as a casting.

6. The turbo machine according to any one of the preceding Claims 1 - 3, **characterized in that** the diffuser insert and/or the housing is formed as a welded part.

7. The turbo machine according to any one of the preceding claims, **characterized in that** the housing is designed pot-like and the diffuser insert is connected to the housing in a fluid-tight manner.

8. The turbo machine according to Claim 7, **characterized in that** the diffuser insert comprises a flange (7), with which it is connected to the housing in a fluid-tight manner.

9. The turbo machine according to Claim 8, **characterized in that** the flange is detachably fastened to the housing, in particular screwed to the same.

10. The turbo machine according to any one of the preceding claims, **characterized in that** the diffuser insert (5) together with the housing forms the diffuser.

11. The turbo machine according to any one of the preceding Claims 1 - 9, **characterized in that** in the diffuser insert (5) an inlet insert (8) is arranged, in particular detachably fastened, which forms the axial diffuser (2).

12. The turbo machine according to any one of the preceding claims, **characterized in that** in the housing (1) an aperture (9) for the entry and exit of the fluid is provided, which communicates with the spiral.

13. The turbo machine according to any one of the preceding claims, **characterized in that** in the housing and/or the diffuser insert a mounting for guide vanes, in particular inlet guide vanes or discharge guide vanes is formed.

14. The turbo machine according to any one of the preceding claims, **characterized in that** in the housing a seal or a sealed mounting for a shaft (11) of the impeller is formed.

15. The turbo machine according to any one of the preceding claims, **characterized in that** the fluid is a gas and the turbo machine a radial compressor or radial expander.

16. The turbo machine according to any one of the preceding Claims 1 - 14, **characterized in that** the fluid is a liquid and the turbo machine a Francis turbine or spiral housing pump.

17. A method for producing a turbo machine according to any one of the preceding claims, **characterized in that** the housing and the diffuser insert are detachably connected to one another, in particular screwed to one another.

18. The method according to Claim 17, **characterized in that** spiral contour (6) is milled into the diffuser insert (5).

## Revendications

1. Turbomachine, notamment compresseur radial, expanseur radial, turbine Francis ou pompe centrifuge, respectivement radiale, comportant un carter (1) ;
un diffuseur axial (2) ;
une roue à aubes (3) pour dévier un fluide entre une direction axiale et une direction radiale ;
une spirale ou un espace de collecte (4) ; et
un embout de diffuseur axial (5), qui est renfermé au moins partiellement dans le carter ; et
**caractérisée en ce que**
dans l'embout de diffuseur (5) un contour de spirale, respectivement d'espace de collecte (6) est réalisé, qui définit conjointement au carter (1) la spirale, resp. l'espace de collecte (4), dans lequel conjointement à l'embout de diffuseur (5) un embout d'entrée est aussi vissé au carter.

2. Turbomachine selon la revendication 1, **caractérise en ce que** l'embout de diffuseur est relié de manière amovible au carter, notamment est vissé.

3. Turbomachine selon une des revendications précédentes,
**caractérisée en ce que** le contour de spirale est réalisé par enlèvement de copeaux dans l'embout de diffuseur, notamment est fraisé dans celui-ci.

4. Turbomachine selon une des revendications précédentes,
**caractérisée en ce que** l'embout de diffuseur et/ou le carter est réalisé comme une pièce façonnée, notamment une pièce forgée.

5. Turbomachine selon une des revendications précédentes 1-3, **caractérisée en ce que** l'embout de diffuseur et/le carter est réalisé comme une pièce façonnée, notamment une pièce moulée.

6. Turbomachine selon une des revendications précédentes 1-3, **caractérisée en ce que** l'embout de diffuseur et/ou le carter est réalisé comme une pièce soudée.

7. Turbomachine selon une des revendications précédentes,
**caractérisée en ce que** le carter est réalisé en forme de chaudron et l'embout de diffuseur est relié au carter de manière étanche aux fluides.

8. Turbomachine selon une des revendications précédentes,
**caractérisée en ce que** l'embout de diffuseur présente une bride avec laquelle il est relié au carter de manière étanche aux fluides.

9. Turbomachine selon une des revendications précédentes,
**caractérisée en ce que** la bride est fixée de manière amovible sur le carter, notamment est vissée à celle-ci.

10. Turbomachine selon une des revendications précédentes,
**caractérisée en ce que** l'embout de diffuseur (5) forme le diffuseur conjointement au carter.

11. Turbomachine selon une des revendications précédentes 1-9, **caractérisée en ce que** dans l'embout de diffuseur (5) un embout d'entrée (8) est disposé, notamment est fixé de manière amovible, qui forme le diffuseur axial (2).

12. Turbomachine selon une des revendications précédentes,
**caractérisée en ce que** dans le carter (1) est prévu une ouverture (9) pour l'entrée respectivement la sortie du fluide, qui communique avec la spirale.

13. Turbomachine selon une des revendications précédentes,
**caractérisée en ce que** dans le carter et/ou l'embout de diffuseur un palier pour une grille de guidage, notamment une grille de guidage avant, resp. arrière est réalisé.

14. Turbomachine selon une des revendications précédentes,
**caractérisée en ce que** dans le carter est réalisée une étanchéité ou un palier étanche pour un arbre (11) de la roue à aubes.

15. Turbomachine selon une des revendications précédentes,
**caractérisée en ce que** le fluide est un gaz et la turbomachine est un compresseur radial ou un expanseur radial.

16. Turbo machine selon une des revendications précédentes 1-14, **caractérisée en ce que** le fluide est un liquide et la turbomachine est une turbine Francis ou un carter de pompe à spirale.

17. Procédé de fabrication d'une turbo machine selon une des revendications précédentes, **caractérisé en ce que** le carter et l'embout de diffuseur sont reliés l'un à l'autre de manière amovible, notamment sont vissés.

18. Procédé selon la revendication 17, **caractérisé en ce que** le contour de spirale (6) est fraisé dans l'embout de diffuseur (5).
